# EUROPEAN PATENT APPLICATION

(11) **EP 1 375 586 A1**
(43) Date of publication of application: **02.01.2004**
(21) Application number: 02702807.5
(22) Date of filing: 07.03.2002
(51) Int. Cl.: C08L 25/04, C08L 71/12, C08L 21/00, C08L 23/00, C08K 3/00

(54) **STYRENE POLYMER COMPOSITION AND MOLDED ARTICLE OBTAINED THEREFROM**

(30) Priority: 23.03.2001 JP 2001085435
(71) Applicant: IDEMITSU PETROCHEMICAL CO., LTD., Tokyo 130-0015 (JP)
(72) Inventor: OKADA, Akihiko, Ichihara-shi, Chiba 299-0107 (JP); AOYAMA, Takuma, Ichihara-shi, Chiba 299-0107 (JP)
(74) Representative: Gille Hrabal Struck Neidlein Prop Roos
(86) International application number: PCT/JP2002/002133
(87) International publication number: WO 2002/077098

(57) **Abstract**

A styrene polymer composition containing a component (A); i.e., a styrene polymer having an atactic configuration, or a mixture of a styrene polymer having an atactic configuration and a polyphenylene ether, a component (B); i.e., a styrene polymer having a syndiotactic configuration, and a component (E); i.e., a plasticizer; and optionally containing a component (C); i.e., a polyphenylene ether and a component (D); i.e., a rubber and/or a polyolefin, wherein the amount of the component (B) is 3 to 90 parts by weight on the basis of 100 parts by weight of the total amount of the components (A), (B), (C), and (D), and the amount of the component (E) is 0.05 to 10 parts by weight on the basis of 100 parts by weight of the total amount of the components (A), (B), (C), and (D); and a molded product formed through molding of the composition. The present invention provides a molded product exhibiting chemical resistance even when high strain is applied thereto, as well as a styrene polymer composition which is suitable as a material for forming such a molded product.

## Description

### Technical Field

The present invention relates to a styrene polymer composition predominantly containing a styrene polymer, and to a molded product endowed with excellent chemical resistance and formed from the composition.

### Background Art

Conventionally, styrene polymers having an atactic configuration (hereinafter may be referred to as "atactic polystyrene"), which are produced through radical polymerization, have been widely used, since they can be produced at low cost. Atactic polystyrene, which has an atactic configuration, is an amorphous polymer, and does not necessarily exhibit satisfactory chemical resistance. Therefore, a limitation is imposed on the fields of application of atactic polystyrene as a molding material.

Most detergents and toiletry products which have recently been commercialized cause cracking of polystyrene, and thus the market has produced keen demand for improvement of the chemical resistance of polystyrene.

In order to improve chemical resistance of atactic polystyrene, there has been employed a method in which styrene is copolymerized with a polar monomer such as acrylonitrile, a methacrylate, an acrylate, maleic anhydride, or maleimide. However, a copolymer produced through this method involves the following problems: a limitation is imposed on the random copolymerization ratio; productivity is low; the copolymer has a poor color and issues an odor; difficulty is encountered in mixing the copolymer with another polystyrene resin and in recycling the copolymer; and the copolymer generates cyanogen gas when incinerated.

In view of the foregoing, a syndiotactic polystyrene resin exhibiting crystallinity has been developed, and in addition, a composition of a syndiotactic polystyrene resin and atactic polystyrene has been proposed for the purpose of improving chemical resistance of the atactic polystyrene (e.g., Japanese Patent Application Laid-Open (kokai) Nos. 11-279347 and 11-279349).

However, simple addition of a syndiotactic polystyrene resin to an atactic polystyrene resin does not produce a styrene resin composition having satisfactory chemical resistance particularly under application of high strain, although the produced styrene resin composition exhibits chemical resistance higher than that of the atactic polystyrene, and thus, a limitation is imposed on the fields of application of the resin composition.

### Disclosure of the Invention

In order to solve the aforementioned problems involved in the conventional techniques, objects of the present invention are to provide a molded product exhibiting chemical resistance even when high strain is applied thereto, and to provide a styrene polymer composition which is suitable as a material for forming such a molded product.

The present inventors have performed extensive studies, and as a result have found that, when syndiotactic polystyrene and a plasticizer are incorporated into atactic polystyrene or a mixture of atactic polystyrene and polyphenylene ether, the resultant composition exhibits sufficient chemical resistance. The present invention has been accomplished on the basis of this finding.

Accordingly, the present invention provides a styrene polymer composition comprising a component (A); i.e., a styrene polymer having an atactic configuration, or a mixture of a styrene polymer having an atactic configuration and a polyphenylene ether, a component (B); i.e., a styrene polymer having a syndiotactic configuration, and a component (E); i.e., a plasticizer; and optionally comprising a component (C); i.e., a polyphenylene ether and a component (D); i.e., a rubber and/or a polyolefin, wherein the amount of the component (B) is 3 to 90 parts by weight on the basis of 100 parts by weight of the total amount of the components (A), (B), (C), and (D), and the amount of the component (E) is 0.05 to 10 parts by weight on the basis of 100 parts by weight of the total amount of the components (A), (B), (C), and (D). The present invention also provides a chemical-resistant molded product formed through molding of the composition.

### Best Mode for Carrying Out the Invention

As described above, the styrene polymer composition of the present invention contains, as essential components, (A) a styrene polymer having an atactic configuration, or a mixture of a styrene polymer having an atactic configuration and a polyphenylene ether, (B) a styrene polymer having a syndiotactic configuration, and (E) a plasticizer; and contains, as optional components, (C) a polyphenylene ether and (D) a rubber and/or a polyolefin.

The styrene polymer having an atactic configuration (component (A)) employed in the present invention (hereinafter the polymer may be referred to as the "atactic polystyrene") is produced through a typical polymerization technique such as solution polymerization, bulk polymerization, suspension polymerization, or bulk-suspension polymerization. The atactic polystyrene is produced from an aromatic vinyl-group-containing compound (hereinafter may be referred to simply as an "aromatic vinyl compound") serving as a monomer (i.e., a raw material) represented by the following formula (I): 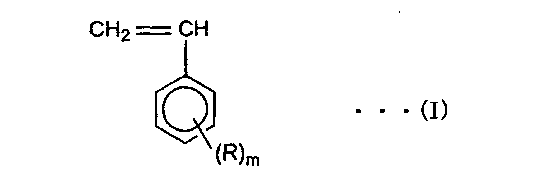 [wherein R represents a hydrogen atom, a halogen atom, or a substituent including at least one atomic species selected from the group consisting of a carbon atom, an oxygen atom, a nitrogen atom, a sulfur atom, a phosphorus atom, a selenium atom, a silicon atom, and a tin atom; m represents an integer of 1 to 3; and, when m is 2 or more, the Rs may be identical or may differ from one another]. The atactic polystyrene may be a copolymer of one or more species of the aromatic vinyl compound represented by the formula (I) and a vinyl-group-containing monomer (hereinafter may be referred to simply as a "vinyl monomer") other than the vinyl compound or a rubbery polymer, which can be copolymerized with the vinyl compound; a hydride of the polymer or the copolymer; or a mixture thereof.

Examples of the aromatic vinyl compound represented by the formula (I) include styrene, α-methylstyrene, methylstyrene, ethylstyrene, isopropylstyrene, tert-butylstyrene, phenylstyrene, vinylstyrene, chlorostyrene, bromostyrene, fluorostyrene, chloromethylstyrene, methoxystyrene, and ethoxystyrene. These compounds may be employed singly or in combination of two or more species. Of these aromatic vinyl compounds, styrene, p-methylstyrene, m-methylstyrene, p-tert-butylstyrene, p-chlorostyrene, m-chlorostyrene, and p-fluorostyrene are particularly preferred.

Examples of the vinyl monomer other than the aforementioned aromatic vinyl compound, which can be copolymerized with the aromatic vinyl compound, include vinyl cyanic compounds such as acrylonitrile and methacrylonitrile; acrylates such as methyl acrylate, ethyl acrylate, propyl acrylate, butyl acrylate, amyl acrylate, hexyl acrylate, octyl acrylate, 2-ethylhexyl acrylate, cyclohexyl acrylate, dodecyl acrylate, octadecyl acrylate, phenyl acrylate, and benzyl acrylate; methacrylates such as methyl methacrylate, ethyl methacrylate, butyl methacrylate, amyl methacrylate, hexyl methacrylate, octyl methacrylate, 2-ethylhexyl methacrylate, cyclohexyl methacrylate, dodecyl methacrylate, octadecyl methacrylate, phenyl methacrylate, and benzyl methacrylate; and maleimide compounds such as maleimide, N-methylmaleimide, N-ethylmaleimide, N-butylmaleimide, N-laurylmaleimide, N-cyclohexylmaleimide, N-phenylmaleimide, and N-(p-bromophenyl)maleimide.

Examples of the rubbery polymer which can be copolymerized with the aforementioned aromatic vinyl compound include diene rubbers such as polybutadiene, styrene-butadiene copolymers, acrylonitrile-butadiene copolymers, and polyisoprene; non-diene rubbers such as ethylene-α-olefin copolymers, ethylene-α-olefin-polyene copolymers, and polyacrylates; styrene-butadiene block copolymers; hydrogenated styrene-butadiene block copolymers; ethylenepropylene elastomers; styrene-graft-ethylene-propylene elastomers; ethylene-based ionomer resins; and hydrogenated styrene-isoprene copolymers.

No particular limitations are imposed on the molecular weight of the atactic polystyrene serving as the component (A), but the weight average molecular weight of the atactic polystyrene is typically 10,000 or more, preferably 50,000 or more. When the weight average molecular weight of the atactic polystyrene is less than 10,000, a molded product formed from the polymer composition exhibits poor thermal and mechanical characteristics. No particular limitations are imposed on the molecular weight distribution of the atactic polystyrene, and atactic polystyrenes with various molecular weight distributions may be employed.

In order to improve impact resistance of a molded product produced from the composition of the present invention, if desired, a rubbery elastomer may be employed as a constituent of the component (A) in combination with the atactic polystyrene. Specific examples of the rubbery elastomer which may be employed include natural rubber; polybutadiene; polyisoprene; polyisobutylene; neoprene; polysulfide rubber; Thiokol rubber; acrylic rubber; urethane rubber; silicone rubber; epichlorohydrin rubber; a styrene-butadiene block copolymer (SBR); a hydrogenated styrene-butadiene block copolymer (SEB, SEBC); a styrene-butadiene-styrene block copolymer (SBS); a hydrogenated styrene-butadiene-styrene block copolymer (SEBS); a styrene-isoprene block copolymer (SIR); a hydrogenated styrene-isoprene block copolymer (SEP); a styrene-isoprene-styrene block copolymer (SIS); a hydrogenated styrene-isoprene-styrene block copolymer (SEPS); ethylene propylene rubber (EPM); ethylene propylene diene rubber (EPDM); core-shell-type particulate elastomers such as butadiene-acrylonitrile-styrene core-shell rubber (ABS), methyl methacrylate-butadiene-styrene core-shell rubber (MBS), methyl methacrylate-butyl acrylate-styrene core-shell rubber (MAS), octyl acrylate-butadiene-styrene core-shell rubber (MABS), alkyl acrylate-butadiene-acrylonitrile-styrene core-shell rubber (AABS), butadienestyrene core-shell rubber (SBR), and core-shell rubber containing a siloxane (e.g., methyl methacrylate-butyl acrylate-siloxane); and modified rubbers thereof. Of these rubbery elastomers, SBR, SEB, SBS, SEBS, SIR, SEP, SIS, SEPS, core-shell rubbers, EPM, EPDM, and modified rubbers thereof are particularly preferred. These rubbery elastomers may be employed singly or in combination of two or more species.

The amount of the rubbery elastomer incorporated into the component (A) is 50 wt.% or less, preferably 40 wt.% or less, more preferably 30 wt.% or less, on the basis of the entirety of the component (A). When the incorporation amount of the rubbery elastomer exceeds 50 wt.%, the polymer composition may exhibit poor chemical resistance and low elastic modulus.

In order to enhance heat resistance of the polymer composition, the component (A) may contain a polyphenylene ether as a constituent thereof. The polyphenylene ether incorporated into the component (A) is preferably a polyphenylene ether described, for example, in US Patent No. 3306874, 3306875, 3257357, or 3257358. A polyphenylene ether is prepared through oxidative coupling reaction forming homopolymers or copolymers in the presence of, for example, a copper-amine complex and a phenol compound having one or more substituents. The copper-amine complex to be employed is preferably a copper-amine complex derived from a primary, secondary, or tertiary amine.

Examples of the polyphenylene ether suitable for use as a constituent of the component (A) include poly(2,3-dimethyl-6-ethyl-1,4-phenylene ether), poly(2-methyl-6-chloromethyl-1,4-phenylene ether), poly(2-methyl-6-hydroxyethyl-1,4-phenylene ether), poly(2-methyl-6-n-butyl-1,4-phenylene ether), poly(2-ethyl-6-isopropyl-1,4-phenylene ether), poly(2-ethyl-6-n-propyl-1,4-phenylene ether), poly(2,3,6-trimethyl-1,4-phenylene ether), poly(2-(4'-methylphenyl)-1,4-phenylene ether), poly(2-bromo-6-phenyl-1,4-phenylene ether), poly(2-methyl-6-phenyl-1,4-phenylene ether), poly(2-phenyl-1,4-phenylene ether), poly(2-chloro-1,4-phenylene ether), poly(2-methyl-1,4-phenylene ether), poly(2-chloro-6-ethyl-1,4-phenylene ether), poly(2-chloro-6-bromo-1,4-phenylene ether), poly(2,6-di-n-propyl-1,4-phenylene ether), poly(2-methyl-6-isopropyl-1,4-phenylene ether), poly(2-chloro-6-methyl-1,4-phenylene ether), poly(2-methyl-6-ethyl-1,4-phenylene ether), poly(2,6-dibromo-1,4-phenylene ether), poly(2,6-dichloro-1,4-phenylene ether), poly(2,6-diethyl-1,4-phenylene ether), and poly(2,6-dimethyl-1,4-phenylene ether). Of these, poly(2,6-dimethyl-1,4-phenylene ether) is particularly preferred.

The polyphenylene ether may be, for example, a copolymer derived from two or more phenol compounds employed for preparation of the aforementioned homopolymers. Also, products obtained by modifying the above polymers or copolymers by use of a modifier such as maleic anhydride or fumaric acid may be beneficially employed. Alternatively, copolymers obtained through graft copolymerization or block copolymerization between an aromatic vinyl compound (e.g., styrene) and the aforementioned polyphenylene ether may be employed.

The molecular weight of the polyethylene ether employed herein is defined by its intrinsic viscosity. The intrinsic viscosity as measured at 25°C in chloroform is 0.5 dl/g or less, preferably 0.45 dl/g or less. When the polyphenylene ether having an intrinsic viscosity in excess of 0.5 dl/g is incorporated into the component (A), the resultant molding material may exhibit considerably lowered fluidity during the course of molding.

When the polyphenylene ether is incorporated into the component (A) as a constituent thereof, no particular limitations are imposed on the incorporation amount of the polyphenylene ether. However, the incorporation amount is preferably 5 to 80 wt.%, more preferably 10 to 60 wt.%, on the basis of the entirety of the component (A). When the incorporation amount of the polyphenylene ether is less than 5 wt.% on the basis of the entirety of the component (A), the polyphenylene ether exhibits insufficient effect of improving heat resistance, whereas when the incorporation amount exceeds 80 wt.%, the resultant molding material may exhibit considerably lowered fluidity during the course of molding.

The styrene polymer composition of the present invention contains a styrene polymer having a syndiotactic configuration (component (B)) (hereinafter the polymer may be referred to simply as an "SPS"). The expression "an SPS has a syndiotactic configuration" refers to the case where an SPS has a stereochemical configuration in which phenyl groups (side chains) alternate in opposite directions with respect to the main chain formed of a carbon-carbon bond. Tacticity is quantified by means of nuclear magnetic resonance spectroscopy employing a carbon isotope (¹³C-NMR). Tacticity measured by means of ¹³C-NMR is represented by the amount of a plurality of successive structural units; for example, diad (two successive structural units), triad (three successive structural units), or pentad (five successive structural units). As used herein, the SPS refers to polystyrene, poly(alkylstyrene), poly(halogenated styrene), poly(halogenated alkylstyrene), poly(alkoxystyrene), poly(vinyl benzoate), hydrogenated polymers of these polymers, mixtures of these polymers, and copolymers predominantly containing such a polymer, which typically have a diad (racemic diad) syndiotacticity of 75% or more, preferably 85% or more, or have a pentad (racemic pentad) syndiotacticity of 30% or more, preferably 50% or more. Examples of the poly(alkylstyrene) include poly(methylstyrene), poly(ethylstyrene), poly(isopropylstyrene), poly(tert-butylstyrene), poly(phenylstyrene), poly(vinylnaphthalene), and poly(vinylstyrene). Examples of the poly(halogenated styrene) include poly(chlorostyrene), poly(bromostyrene), and poly(fluorostyrene). Examples of the poly(halogenated alkylstyrene) include poly(chloromethylstyrene). Examples of the poly(alkoxystyrene) include poly(methoxystyrene) and poly(ethoxystyrene).

Of these styrene polymers, polystyrene, poly(p-methylstyrene), poly(m-methylstyrene), poly(ethylstyrene), poly(divinylbenzene), poly(p-tert-butylstyrene), poly(p-chlorostyrene), poly(m-chlorostyrene), poly(p-fluorostyrene), hydrogenated polystyrene, and copolymers containing such a structural unit are particularly preferred.

The aforementioned SPS can be produced through, for example, polymerization of a styrene monomer (i.e., a monomer corresponding to the aforementioned styrene polymer) by use of a catalyst (a titanium compound and a condensation product of water and trialkylaluminum) in an inert hydrocarbon solvent or in the absence of a solvent (Japanese Patent Application Laid-Open *(kokai)* No. 62-187708). The poly(halogenated alkylstyrene) can be produced through, for example, the method described in Japanese Patent Application Laid-Open *(kokai)* No. 1-46912. Hydrogenated polymers of the SPS can be produced through, for example, the method described in Japanese Patent Application Laid-Open *(kokai)* No. 1-178505.

Examples of the comonomer employed for forming the styrene copolymer include the aforementioned monomer for forming the styrene polymer; olefin monomers such as ethylene, propylene, butene, hexene, and octene; diene monomers such as butadiene and isoprene; cyclic diene monomers; and polar vinyl monomers such as methyl methacrylate, maleic anhydride, and acrylonitrile.

Particularly, a styrene polymer containing a styrene repeating unit in an amount of 80 to 100 mol% and p-methylstyrene repeating unit in an amount of 0 to 20 mol% is preferably employed.

In the present invention, no particular limitations are imposed on the molecular weight of the SPS. However, the weight average molecular weight of the SPS as reduced to polystyrene is preferably 10,000 or more, more preferably 50,000 or more, as measured by means of gel permeation chromatography (GPC) (solvent: trichlorobenzene, 135°C). When the weight average molecular weight is less than 10,000, the resultant composition or molded product exhibits poor thermal and mechanical characteristics. No particular limitations are imposed on the molecular weight distribution of the SPS, and SPSs with various molecular weight distributions may be employed.

No particular limitations are imposed on the melting point of the SPS, but the melting point is preferably 270°C or lower, more preferably 250°C or lower. When the melting point exceeds 270°C, molding of the resultant composition requires a temperature of 280°C to 300°C, which may lead to problems, including impairment of moldability of the composition and impairment of physical properties of the composition caused by thermal deterioration.

In the styrene polymer composition of the present invention, the amount of the component (B) is 3 to 90 parts by weight, preferably 5 to 80 parts by weight, more preferably 10 to 50 parts by weight, on the basis of 100 parts by weight of the total amount of the components (A), (B), (C), and (D). When the amount of the component (B) is below the above range, the effect of improving chemical resistance is insubstantial, whereas when the amount of the component (B) exceeds the above range, production cost disadvantageously increases.

In order to improve the heat resistance and other characteristics of the styrene polymer composition of the present invention, a polyphenylene ether may be incorporated into the composition as the component (C). The polyphenylene ether (component (C)) may be a polyphenylene ether serving as a constituent of the component (A).

When a polyphenylene ether is incorporated as the component (C) into the composition, no particular limitations are imposed on the incorporation amount of the component (C). However, the incorporation amount of the component (C) is 5 to 80 parts by weight, preferably 10 to 50 parts by weight, on the basis of 100 parts by weight of the total amount of the components (A), (B), (C), and (D). When the incorporation amount of the component (C) is less than 5 parts by weight, the effect of improving heat resistance of the composition is lowered, whereas when the incorporation amount exceeds 80 parts by weight, fluidity of the resultant composition may be considerably lowered during the course of molding.

In order to improve the impact resistance and other characteristics of the styrene polymer composition of the present invention, a rubber and/or a polyolefin may be incorporated into the composition as the component (D). Examples of the rubber and polyolefin components include natural rubber; polybutadiene; polyisoprene; polyisobutylene; neoprene; polysulfide rubber; Thiokol rubber; acrylic rubber; urethane rubber; silicone rubber; epichlorohydrin rubber; a styrene-butadiene block copolymer (SBR); a hydrogenated styrene-butadiene block copolymer (SEB, SEBC); a styrene-butadiene-styrene block copolymer (SBS); a hydrogenated styrene-butadiene-styrene block copolymer (SEBS); a styrene-isoprene block copolymer (SIR); a hydrogenated styrene-isoprene block copolymer (SEP); a styrene-isoprene-styrene block copolymer (SIS); a hydrogenated styrene-isoprene-styrene block copolymer (SEPS); ethylene propylene rubber (EPM); ethylene propylene diene rubber (EPDM); an ethylene-α-olefin copolymer; core-shell-type particulate elastomers such as butadiene-acrylonitrile-styrene core-shell rubber (ABS), methyl methacrylate-butadiene-styrene core-shell rubber (MBS), methyl methacrylate-butyl acrylate-styrene core-shell rubber (MAS), octyl acrylate-butadiene-styrene core-shell rubber (MABS), alkyl acrylate-butadiene-acrylonitrile-styrene core-shell rubber (AABS), butadienestyrene core-shell rubber (SBR), and core-shell rubber containing a siloxane (e.g., methyl methacrylate-butyl acrylate-siloxane); polyolefin-based resins such as linear-chain high-density polyethylene, linear-chain low-density polyethylene, high-pressure low-density polyethylene, isotactic polypropylene, syndiotactic polypropylene, block polypropylene, random polypropylene, polybutene, 1,2-polybutadiene, cyclic polyolefin, and poly(4-methylpentene); and products obtained through modification of the above polymers. Of these, styrene block polymers such as SBR, SEB, SBS, SEBS, SIR, SEP, SIS, and SEPS; and combinations of the aforementioned styrene block polymer, EPM, EPDM, an ethylene-α-olefin copolymer, and a polyolefin-based resin are preferably employed. The aforementioned rubbers or polyolefins may be employed singly or in combination of two or more species.

When the component (D) is incorporated into the composition, no particular limitations are imposed on the incorporation amount of the component (D). However, the incorporation amount of the component (D) is 1 to 80 parts by weight, preferably 3 to 50 parts by weight, more preferably 5 to 30 parts by weight, on the basis of 100 parts by weight of the total amount of the components (A), (B), (C), and (D). When the incorporation amount of the component (D) is less than 1 part by weight, the effect of improving physical properties of the composition is lowered, whereas when the incorporation amount exceeds 80 parts by weight, the chemical resistance and elastic modulus of the resultant composition may be lowered.

The polymer composition of the present invention further contains a plasticizer as the component (E). The plasticizer may be arbitrarily chosen from among known plasticizers. Examples of the known plasticizers include polyethylene glycol, polyamide oligomers, ethylene bis(stearamide), phthalates, polystyrene oligomers, polyethylene waxes, mineral oils (paraffin-based, naphthene-based, and aromatic-based), and silicone oil. These plasticizers may be employed singly or in combination of two or more species. Of these plasticizers, mineral oils are particularly preferred.

Mineral oils are roughly classified into three types: paraffin-based, naphthene-based, and aromatic-based oils. Among these mineral oils, there is preferably employed a paraffin-based oil in which the percentage of the number of carbon atoms contained in the paraffin moiety with respect to the total number of carbon atoms is 60%C_{P} or more as measured by means of the n-d-M method. No particular limitations are imposed on the viscosity of the plasticizer, but the kinematic viscosity of the plasticizer as measured at 40°C preferably falls within a range of 15 to 600 mm²/second. When the kinematic viscosity of the plasticizer is less than 15 mm²/second, the boiling point of the resultant composition is lowered, and problems tend to occur during melt-kneading, molding, or similar processes, such as generation of white fumes or gas, contamination of a die with the composition, and adhesion of the composition to a roll. In contrast, when the kinematic viscosity of the plasticizer is 600 mm²/second or more, the effect of improving the chemical resistance of the composition is lowered.

The amount of the plasticizer incorporated into the composition is 0.05 to 10 parts by weight, preferably 0.1 to 8 parts by weight, more preferably 0.3 to 5 parts by weight, on the basis of 100 parts by weight of the total amount of the components (A), (B), (C), and (D). When the incorporation amount of the plasticizer is less than 0.05 parts by weight, the effect of improving the chemical resistance of the composition is lowered, whereas when the incorporation amount exceeds 10 parts by weight, the heat distortion temperature of the resultant composition may be lowered, and moldability of the composition may be impaired.

No particular limitations are imposed on the method for incorporating the plasticizer into the composition, and various incorporation methods may be employed. For example, preferably, the plasticizer is melted and incorporated into the component (A), (B), (C), or (D) in advance; or the plasticizer is melted and incorporated into the composition simultaneous with preparation of the composition through mixing of these components.

The styrene polymer composition of the present invention may contain, in an appropriate amount, an additive such as an inorganic filler, a release agent, an antioxidant, a flame retardant, a flame retarding aid, a dye, a pigment, carbon black, or an antistatic agent; a thermoplastic resin; rubber; or a similar material, so long as the purposes of the present invention are not impeded.

When employed, the inorganic filler may have an arbitrary form such as a fibrous form, a granular form, or a powdery form. Examples of fibrous fillers include glass fiber, carbon fiber, and whiskers. The fibrous filler may have, for example, a cloth-like shape, a mat-like shape, a cut-bundle-like shape, a short fiber shape, a filament-like shape, or a whisker-like shape. When the cut-bundle-like fibrous filler is employed, preferably, the length and diameter of the fibrous filler are 0.05 mm to 50 mm and 5 to 20 µm, respectively. Examples of the granular and powdery fillers include talc, carbon black, graphite, titanium dioxide, silica, mica, calcium carbonate, calcium sulfate, barium carbonate, magnesium carbonate, magnesium sulfate, barium sulfate, oxysulfate, tin oxide, alumina, kaolin, silicon carbide, metallic powder, glass powder, glass flakes, and glass beads.

Of the aforementioned various fillers, glass fillers; for example, glass powder, glass flakes, glass beads, glass filaments, glass fiber, glass robe, and glass mat, are particularly preferred.

The aforementioned filler is preferably subjected to surface treatment. A coupling agent is employed for surface treatment of the filler in order to enhance adhesion between the filler and the resin. The coupling agent may be arbitrarily chosen from among conventionally known coupling agents such as silane-based coupling agents and titanium-based coupling agents. Preferred examples of the coupling agent include aminosilanes such as γ-aminopropyltrimethoxysilane, N-β-(aminoethyl)-γ-aminopropyltrimethoxysilane, γ-glycidoxypropyltrimethoxysilane, and β-(3,4-epoxycyclohexyl)ethyltrimethoxysilane; epoxysilanes; and isopropyltri(N-amidoethyl, aminoethyl) titanate.

The polymer composition may contain a conventionally known film former. For example, a urethane-based film former, an epoxy-based film former, or a polyether-based film former is preferably employed.

When an inorganic filler is incorporated into the polymer composition, the incorporation amount of the filler is 1 to 80 wt.%, preferably 5 to 50 wt.%, on the basis of the entirety of the composition. When the incorporation amount of the inorganic filler is less than 1 wt.%, the effect of the filler is insufficiently obtained, whereas when the incorporation amount exceeds 80 wt.%, dispersibility of the filler is impaired, and difficulty is encountered in molding the composition.

The release agent may be arbitrarily chosen from among known release agents such as polyethylene wax, silicone oil, long-chain carboxylic acids, and long-chain carboxylic acid metallic salts. These release agents may be employed singly or in combination of two or more species.

The antioxidant may be arbitrarily chosen from among a variety of known antioxidant compounds such as phosphorus-based antioxidants, phenol-based antioxidants, and sulfur-based antioxidants. These antioxidants may be employed singly or in combination of two or more species.

The flame retardant may be arbitrarily chosen from among, for example, brominated polymers such as brominated polystyrene, brominated syndiotactic polystyrene, and brominated polyphenylene ether; brominated aromatic compounds such as brominated diphenylalkane and brominated diphenyl ether; and phosphorus-based flame retardants such as tricresyl phosphate, triphenyl phosphate, and tris-3-chloropropyl phosphate.

The flame retarding aid may be arbitrarily chosen from among known flame retarding aids such as antimony compounds (e.g., antimony trioxide).

The polymer composition may contain an agent for drip prevention. The agent may be arbitrarily chosen from known drip prevention agents such as Teflon.

The aforementioned flame retardants or flame retarding aids may be employed singly or in combination of two or more species.

The thermoplastic resin may be arbitrarily chosen from among known thermoplastic resins, including polystyrene resins such as AS and ABS; polyester-based resins such as polycarbonate, polyethylene terephthalate, and polybutylene terephthalate; polyamide-based resins such as polyamide 6 and polyamide 6,6; PPS; and polyether. These thermoplastic resins may be employed singly or in combination of two or more species.

No particular limitations are imposed on the method for producing the styrene polymer composition of the present invention, and the composition may be produced, by means of a known technique, through melt-kneading or dry-blending of the aforementioned components (A), (B), and (E), and, if desired, the components (C) and (D) and other additives.

No particular limitations are imposed on the method for producing a molded product from the styrene polymer composition of the present invention, and the molded product may be produced by means of a known technique such as injection molding or extrusion molding. When the polymer composition is subjected to molding by means of such a molding technique, the temperature of a molding cylinder must be regulated to become equal to or higher than the melting point of the syndiotactic polystyrene (i.e., component (B) of the composition). When molding is carried out at a temperature equal to or lower than the melting point of the syndiotactic polystyrene, difficulty is encountered in imparting sufficient chemical resistance and physical properties to the resultant molded product. The upper limit of the cylinder temperature varies in accordance with the compositional proportion of the components constituting the polymer composition (i.e., molding material). The cylinder temperature is typically 290°C or lower, preferably 270°C or lower, more preferably 260°C or lower. When the molding temperature exceeds 290°C, the number of molding cycles within a predetermined period of time is reduced (the cooling time increases), shrinkage occurs in the molded product, and the molding material is impaired when the material is held in the molding cylinder.

Molded products formed from the aforementioned styrene polymer composition of the present invention by means of various molding techniques (e.g., molded products formed through injection molding, extrusion molding, and thermoforming; uniaxially stretched or biaxially stretched films and sheets formed through extrusion molding and stretching; fibrous molded products formed through spinning; and molded products formed through expansion molding) exhibit excellent characteristics, and are suitable for use in parts requiring chemical resistance.

The molded products of the present invention can be widely employed in a variety of industrial fields. Examples of the application of the injection-molded products include the following: exterior parts for a vehicle, such as a radiator grille, a grille, a mark, a back panel, a side mirror, a wheel cap, an air spoiler, and a cowl for a two-wheeled vehicle; interior parts for an automobile, such as an instrument panel, a meter hood, a pillar, a glove box, a console box, a speaker box, a lid, and a battery; audiovisual equipment parts, such as a housing, a chassis, a cassette case, a CD magazine, and a remote controller case; electric refrigerator parts, such as a lining, a tray, an arm, a door cap, and a handle; electric vacuum cleaner parts, such as a housing, a handle, a pipe, and an inlet port; air conditioner parts, such as a housing, a fan, a remote controller case, and a drain case; parts for an electric fan, an exhaust fan, a washing machine, and an illumination apparatus; electric appliances and parts thereof, such as a battery case; parts for a printer and a copying machine, such as a housing, a chassis, a ribbon cassette, and a tray; personal computer parts, such as a housing, a floppy disk shell, and a keyboard; parts for a telephone and a communication device, such as a housing, a receiver, and a mechanical chassis; general apparatuses and parts thereof, such as a sewing machine, a register, a typewriter, a calculator, an optical device, and a musical instrument; toys such as a remote control car, a radio controller, a block, and pinball machine parts; leisure/sporting goods such as a surfboard and a helmet; sanitary goods such as a toilet seat, a toilet lid, a tank, a shower, a washstand, and a storage panel for a bathroom; kitchen utensils such as a lunchbox, containers, a pot, and a milk portion container; stationery goods; miscellaneous goods; furniture; and various parts such as building and housing materials.

The extrusion-molded products are suitable for use as industrial base materials, such as film, sheet, pipe, and filament.

The present invention will next be described in more detail with reference to Examples and Comparative Examples, but the present invention is not limited to the Examples.

The following materials are employed in the below-described Examples and Comparative Examples.

### Component (A)

A-1: HT56 (impact-resistant polystyrene (HIPS), product of Idemitsu Petrochemical Co., Ltd.)
A-2: Styron VS55 (HIPS, Ignition resistance grade product of A&M Styrene Co., Ltd.)
A-3: Xyron X0718 (polystyrene/polyphenylene oxide (PS/PPO), product of Asahi Chemical Industry Co., Ltd.)
A-4: Xyron 100 (PS/PPO blend, Ignition resistance grade product of Asahi Chemical Industry Co., Ltd.)

### Component (B)

B-1: Syndiotactic styrene homopolymer (weight average molecular weight: 180,000, molecular weight distribution: 2.4, melting point: 270°C)
B-2: Syndiotactic styrene-p-methylstyrene copolymer (weight average molecular weight: 180,000, molecular weight distribution: 2.5, melting point: 235°C)

The weight average molecular weight and molecular weight distribution of each of the above polymers (as reduced to polystyrene) were measured at 135°C by means of GPC employing 1,2,4-trichlorobenzene serving as a solvent. The melting point of each of the polymers was determined on the basis of the position of the melting peak as obtained by use of a differential scanning calorimeter at a temperature increasing rate of 20°C/min.

### Component (C)

C-1: Septon 8006 (SEBS, product of Kuraray Co., Ltd.)
C-2: Septon 8104 (SEBS, product of Kuraray Co., Ltd.)
C-3: ENGAGE 8150 (ethylene-α-olefin copolymer, product of DuPont Dow Elastomers L.L.C.)
C-4: 640UF (HDPE, product of Idemitsu Petrochemical Co., Ltd.)
C-5: E185G (propylene copolymer, product of Idemitsu Petrochemical Co., Ltd.)

### Component (D)

D-1: YPX100L (poly(2,6-dimethyl-1,4-phenylene ether), product of Mitsubishi Engineering-Plastics Corporation))

### Component (E)

E-1: CP50s (mineral oil, product of Idemitsu Kosan Co., Ltd.)
E-2: PW380 (mineral oil, product of Idemitsu Kosan Co., Ltd.)
E-3: DOP (di-2-ethylhexyl phthalate, product of Tokyo Kasei Kogyo Co., Ltd.)
E-4: TCP (tricresyl phosphate, product of Daihachi Chemical Industry Co., Ltd.)

### Component (F)

F-1: JA-FT164G (glass fiber, Asahi Fiber Glass Co., Ltd.)

### Examples 1 through 23 and Comparative Examples 1 through 18

Samples and test pieces were prepared through the below-described procedure.

Components (A), (B), and (E) and other components were mixed in compositional proportions shown in Table 1, to thereby prepare a polymer composition. The resultant composition was melt-kneaded by use of an extruder at a temperature equal to or higher than the melting point of the component (B), to thereby form pellets. The thus-formed pellets were subjected to injection molding under the following conditions: resin temperature: a Celsius temperature higher by 10 degrees or more than the melting point of the syndiotactic polystyrene (component (B)), a molding die temperature: 40°C, to thereby form a bar (test piece) having a thickness of 3.2 mm.

### Chemical Resistance Evaluation Method

Strain was applied to the thus-formed test piece; specifically, 0.5% strain was applied to the test piece containing no component (F), and 0.2% strain was applied to the test piece containing component (F). Thereafter, a gauze piece impregnated with a chemical was placed on the strain-applied portion of the test piece, and the resultant test piece was covered with a wrapping film in order to prevent volatilization of the chemical. The test piece was allowed to stand at 23°C for 24 hours, and change in appearance of the surface of the test piece and occurrence of cracking were visually observed. The chemical resistance of the test piece was evaluated on the basis of the below-described criteria. The results are shown in Table 1.
AA: no change in appearance
BB: substantially no change in appearance
CC: clouding of the surface, or occurrence of minute cracking
DD: roughening of the surface, or occurrence of cracking
   *: occurrence of dissolving or large cracking

The following chemicals were employed for evaluation.
(1) Bath Magiclean (product of Kao Corporation)
(2) Mypet (product of Kao Corporation)
(3) Powers Bath Cleaning Spray (product of ST Chemical Corporation)

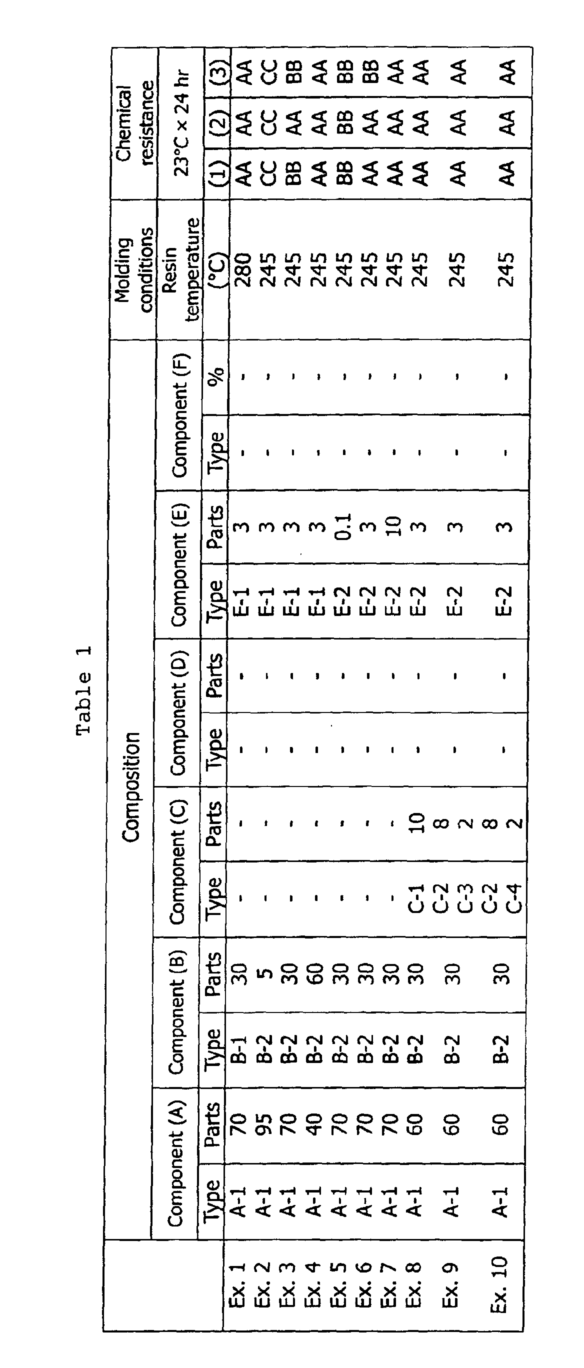

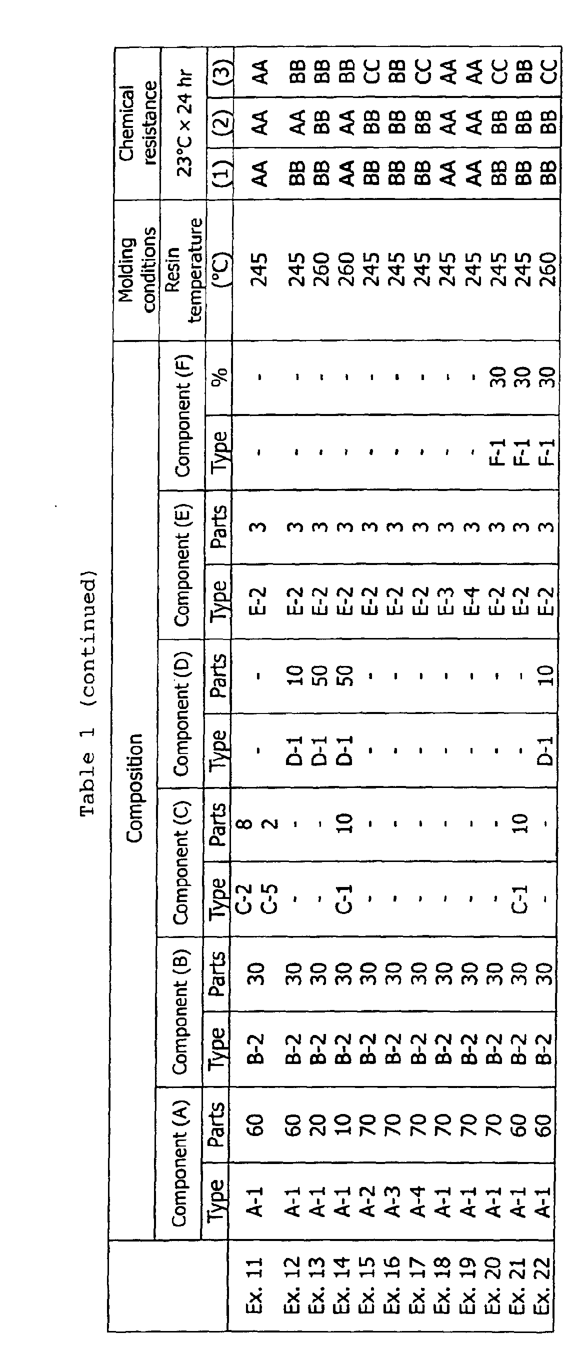

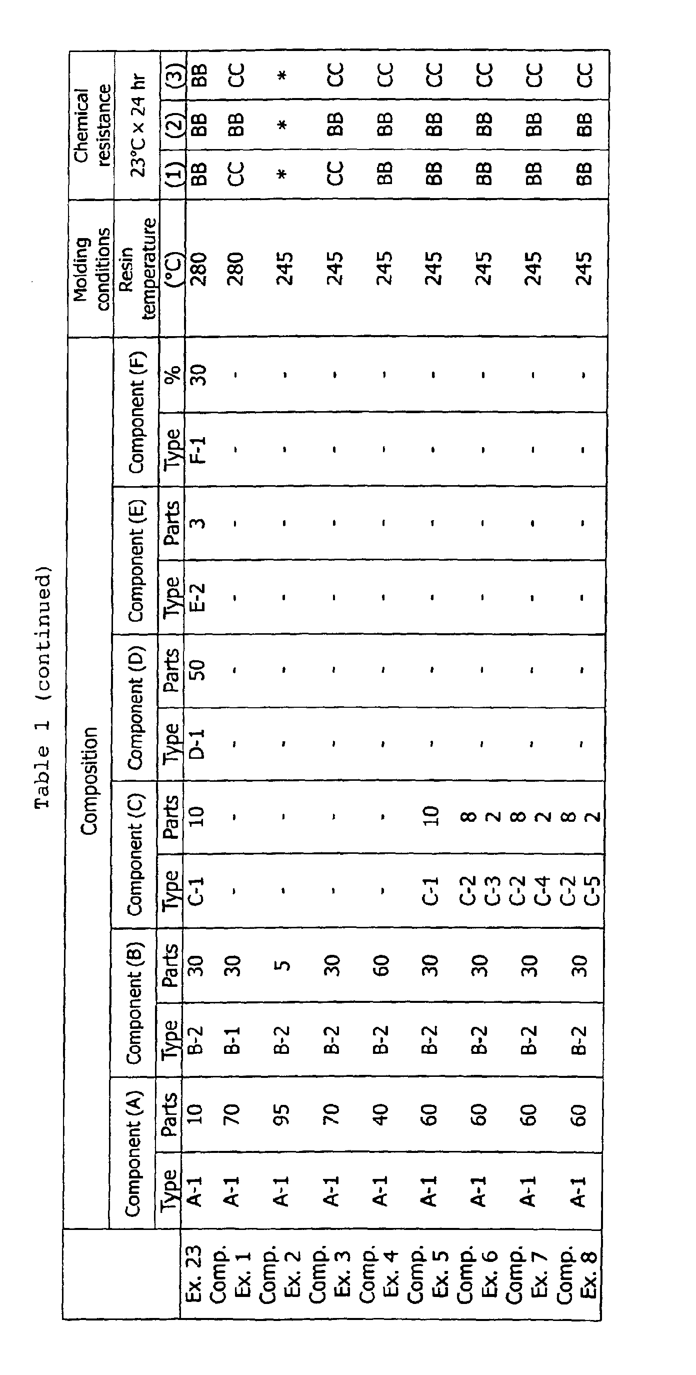

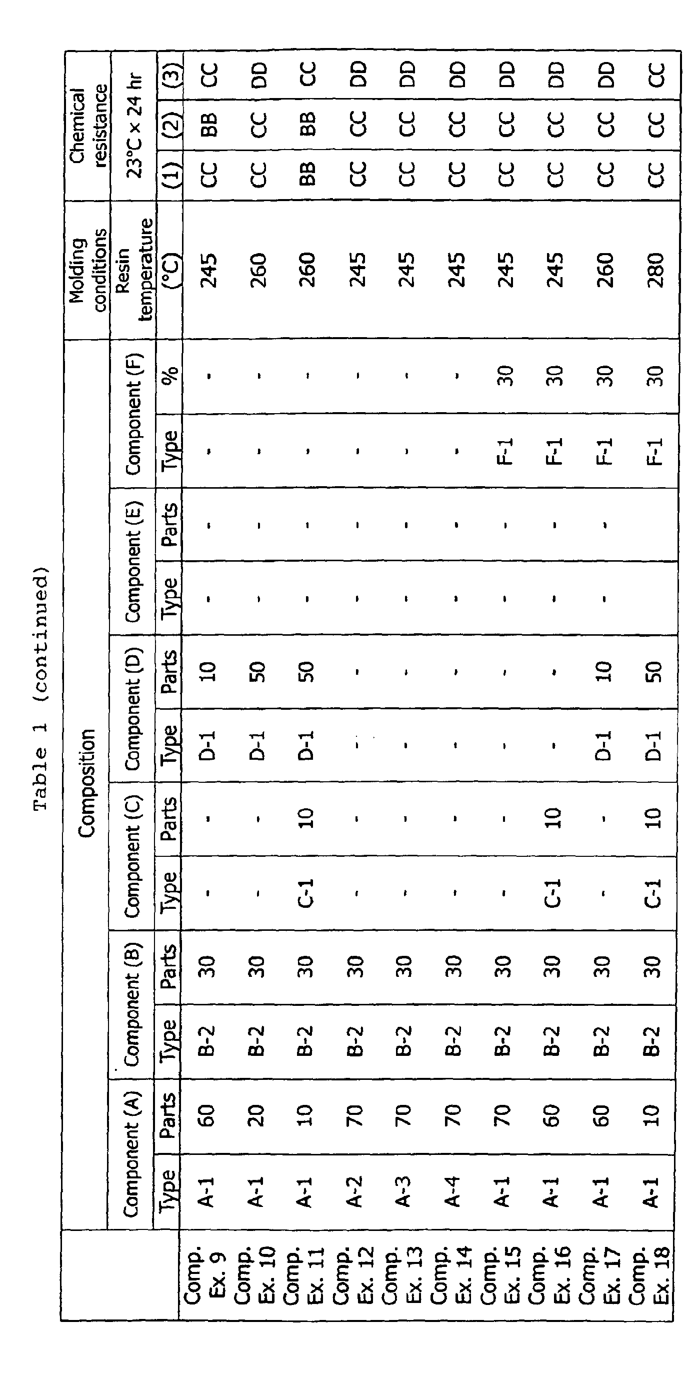

As is clear from Table 1, when the component (E) is incorporated into the polymer composition, the molded product formed from the composition exhibits enhanced chemical resistance even when strain is applied thereto. The results also show that, even if the component (F) (i.e., inorganic filler) is employed in the polymer composition, when the component (E) is incorporated into the composition, the molded product formed from the composition exhibits enhanced chemical resistance.

### Industrial Applicability

When the styrene polymer composition of the present invention is subjected to molding, there can be readily formed a molded product at low cost, which molded product exhibits excellent characteristics, particularly high chemical resistance even when high strain is applied thereto. The chemical-resistance styrene polymer composition of the present invention is envisaged to be effectively employed for producing a variety of molded products; for example, molded products formed through injection molding, sheets and films formed through extrusion molding, containers and trays formed through extrusion molding and thermoforming, uniaxially stretched or biaxially stretched films and sheets formed through extrusion molding and stretching, fibrous molded products formed through spinning, and molded products formed through expansion molding.

## Claims

1. A styrene polymer composition comprising a component (A); i.e., a styrene polymer having an atactic configuration, or a mixture of a styrene polymer having an atactic configuration and a polyphenylene ether, a component (B); i.e., a styrene polymer having a syndiotactic configuration, and a component (E); i.e., a plasticizer; and optionally comprising a component (C); i.e., a polyphenylene ether and a component (D); i.e., a rubber and/or a polyolefin, wherein the amount of the component (B) is 3 to 90 parts by weight on the basis of 100 parts by weight of the total amount of the components (A), (B), (C), and (D), and the amount of the component (E) is 0.05 to 10 parts by weight on the basis of 100 parts by weight of the total amount of the components (A), (B), (C), and (D).

2. A styrene polymer composition according to claim 1, wherein the component (E) is a mineral oil.

3. A styrene polymer composition according to claim 1, wherein the component (A) is a rubber-modified atactic polystyrene polymer, or a mixture of a rubber-modified atactic polystyrene polymer and a polyphenylene ether.

4. A styrene polymer composition according to claim 1, wherein the component (A) further contains a rubbery elastomer as a constituent.

5. A styrene polymer composition according to claim 1, wherein the amount of the polyphenylene ether contained in the component (A) is 5 to 80 wt.%.

6. A styrene polymer composition according to claim 1, wherein the component (D) is a styrene block polymer, or a mixture of a styrene block polymer and a polyolefin.

7. A styrene polymer composition according to claim 1, which further comprises a component (F); i.e., an inorganic filler, in an amount of 1 to 80 wt.%.

8. A chemical-resistant molded product formed through molding of a composition as recited in claim 1.
